# EUROPÄISCHE PATENTANMELDUNG

(11) **EP 1 248 089 A1**
(43) Veröffentlichungstag der Anmeldung: **09.10.2002**
(21) Anmeldenummer: 01108760.8
(22) Anmeldetag: 06.04.2001
(51) Int. Cl.: G01K 11/00

(54) **Verfahren und Erfassungssystem zur Ermittlung eines bei einem Arbeitsprozess auftretenden Temperaturwerts**

(71) Anmelder: SIEMENS AKTIENGESELLSCHAFT, 80333 München (DE)
(72) Erfinder: Klaar, Jürgen, 47506 Neukirchen-Vluyn (DE)

(57) **Zusammenfassung**

Um Schäden in Maschinen oder Anlagen aufgrund unzulässig hoher Temperaturwerte zu vermeiden und diese rechtzeitig zu erfassen ist vorgesehen, dass bei einem Arbeitsprozess eine temperaturbedingte Emission eines Analytgases (G,G1-G6) von einem Chemosensor (10) erfasst und in einer Auswerteeinheit (12) ausgewertet wird. Das Verfahren ist insbesondere zur Ermittlung eines erhöhten Temperaturwerts in einer elektrischen Maschine, insbesondere in einem Kraftwerks-Generator auf dem Gebiet der Energieerzeugung, geeignet.

## Beschreibung

Verfahren und Erfassungssystem zur Ermittlung eines bei einem Arbeitsprozess auftretenden Temperaturwerts

Die Erfindung betrifft ein Verfahren sowie ein Erfassungssystem zur Ermittlung eines bei einem Arbeitsprozess auftretenden Temperaturwerts.

In vielen technischen Gebieten ist eine Temperaturüberwachung bei einem Arbeitsprozess erforderlich. Unter Arbeitsprozess wird hierbei sowohl der Betrieb einer Maschine oder Komponente als auch ein komplexer Verfahrens- oder Fertigungsprozess verstanden. Hierbei wird beispielsweise die Temperatur der Maschine oder der Komponente, eines Betriebsmittels, oder auch eines zu behandelnden Werkstücks erfasst. Die Erfassung des Temperaturwerts beim Arbeitsprozess dient insbesondere dazu, unzulässig hohe Temperaturen rechtzeitig zu erkennen, um Schäden aufgrund der Überhitzung zu vermeiden oder zumindest Folge- oder Totalschäden zu verhindern.

Bei einer elektrischen Rotationsmaschine, wie ein Generator oder Motor, besteht die Gefahr, dass bei einer unzulässigen Temperatur beispielsweise die Isolierung der Generatorwicklung Schaden nimmt. Wird die Schädigung der Isolierung nicht rechtzeitig erkannt, so führt dies unter Umständen zu einem Totalschaden des Generators. Insbesondere im Bereich der Kraftwerksgeneratoren, die für eine Leistung von mehreren hundert Megawatt ausgelegt sind, fallen sehr hohe Schadenskosten an.

Üblicherweise werden zur Temperaturüberwachung herkömmliche Temperatursensoren, Rauchmelder oder auch sogenannte Condition-monitoring-Systeme eingesetzt. Temperatursensoren erfassen dabei lediglich die lokal um den Temperatursensor herrschende Temperatur. Eine vollständige Überwachung einer Anlage oder einer Maschine ist nicht möglich, da eine vollständige Platzierung von Temperatursensoren über die gesamte Anlage in der Regel aufgrund von Platzproblemen nicht möglich ist. Zudem ist der hierzu erforderliche technische Aufwand wirtschaftlich nicht zu vertreten. Insbesondere bei Hochspannungsanlagen kommt erschwerend hinzu, dass die Signalerfassung z.B. mit einem faseroptischen Temperaturmesssystem sehr kostenintensiv ist.

Rauchmelder sind generell zur Detektion von Rauch- oder Rußpartikeln in der Luft ausgebildet und haben den Nachteil, dass sie vergleichsweise spät reagieren und auch eine Lokalisierung der Rauchquelle kaum ermöglichen. Das Gleiche gilt für ein Condition-monitoring-System, bei dem beispielsweise ein Kühlmittel eines Generators auf Partikel überwacht wird, die durch zu hohe Temperaturen frei geworden sind. Bei dem Rauchmelder und dem Condition-monitoring-System ist die Lokalisierung einer unzulässigen Temperaturerhöhung daher systembedingt nur schwer möglich. Bei Temperatursensoren ist demgegenüber die Lokalisierbarkeit dadurch begrenzt, dass sie nicht flächendeckend eingesetzt werden können. Alle Verfahren sind daher insbesondere zur Detektion einer lokal stark begrenzten Überhitzung, wie sie beispielsweise bei einer Funkenerosion erfolgt, nicht geeignet. Die Funkenerosion tritt beispielsweise an Wicklungsstäben in einer Blechpaketnut eines Generators oder an anderen isolierten Hochspannung führenden Systemen auf, die in elektrischen Maschinen an geerdeten Bauteilen anliegen.

Der Erfindung liegt die Aufgabe zugrunde, die frühzeitige Erfassung eines Temperaturwerts bei einem Arbeitsprozess zu ermöglichen, um insbesondere Schäden oder Folgeschäden zu vermeiden.

Die Aufgabe wird gemäß der Erfindung gelöst durch ein Verfahren zum Ermitteln eines bei einem Arbeitsprozess auftretenden Temperaturwerts, wobei eine temperaturbedingte Emission eines Analytgases in einem Chemosensor erfasst und in einer Auswerteeinheit ausgewertet wird.

Unter Chemosensor (auch als Geruchssensor bezeichnet) wird allgemein ein Messwertfühler verstanden, der in der Lage ist, chemische Verbindungen oder Ionen, die in einem Analytgas enthalten sind, zu erfassen und ein entsprechendes Messsignal abzugeben. Der Chemosensor selbst weist als sensitive Einheit einen sogenannten Rezeptor auf. Dieser tritt mit dem Analyt, also mit der chemischen Verbindung oder den Ionen des Analytgases, in Wechselwirkung, wodurch es zu einer Änderung seiner physikalischen Eigenschaften kommt. Diese Änderung wird durch die zweite Einheit des Chemosensors, den sogenannten Transducer, in ein Messsignal umgewandelt. Dieses wird anschließend in der Auswerteeinheit ausgewertet. Die messbaren Parameter für die sich ändernden physikalischen Eigenschaften des Rezeptors sind beispielsweise Temperatur, Masse, Spannung, Strom, Leitfähigkeit oder Kapazität. Als Sensormaterial für den Rezeptor kommt prinzipiell eine Vielzahl von sowohl organischen als auch anorganischen Verbindungen in Betracht. Das Sensorprinzip des Chemosensors und ausgewählte Sensormaterialien sind beispielsweise der Internet-Veröffentlichung der Universität Bonn unter der Internet-Adresse http://www.thch.uni-bonn.de/pc/sensorik/sensor.html zu entnehmen. Eine ausführliche Beschreibung zu unterschiedlichen Chemosensoren, deren Aufbau sowie deren zu Grunde liegenden Prinzipien ist der Internet-Veröffentlichung des Instituts für analytische Chemie der Universität Wien unter der Internet-Adresse http://www.anc.univie.ac.at/deutsch/sensor/chemosensoren zu entnehmen. Ein Multigas-Chemosensor wird beispielsweise von Jenasensoric e.V. angeboten, wie aus http://www.jenasensoric.de zu entnehmen ist.

Dem Einsatz eines Chemosensors zur Erfassung eines Temperaturwerts liegt die Idee zugrunde, dass sich die temperaturbedingte Emission eines Analytgases mit zunehmender Temperatur ändert. Dies äußerst sich beispielsweise darin, dass ein bestimmtes Analytgas erst ab einer gewissen Temperatur freigesetzt wird, oder dass die Konzentration des Analytgases mit der Temperatur kontinuierlich oder auch sprunghaft zunimmt.

Der Chemosensor eignet sich daher sowohl zur Erfassung einer absoluten Temperatur als auch zur Erfassung einer Temperaturveränderung. Sein entscheidender Vorteil ist darin zu sehen, dass aufgrund der Identifizierung eines bestimmten Analytgases eine genaue Lokalisierbarkeit der Quelle des Analytgases möglich ist, selbst wenn der Chemosensor entfernt angeordnet ist. Denn üblicherweise sind in einer Anlage Komponenten aus unterschiedlichen Materialien eingesetzt, die unter Temperatureinwirkung unterschiedliche Analytgase freisetzen. Wird beispielsweise eine Isolierung eines Generators beschädigt, so wird dies anhand des spezifisch freigesetzten Analytgases erfasst. Bei einer großflächig ausgebildeten Isolierung wird hierbei zwar keine punktgenaue Lokalisierung der Temperaturerhöhung erzielt, jedoch wird zweifelsfrei festgestellt, dass die Isolierung Schaden nimmt. Es können sofort geeignete Gegenmaßnahmen, wie Leistungsreduzierung, Abschalten der Maschine und manuelle Überprüfung oder Austausch der Isolierung vorgenommen werden. Unter Lokalisierung ist in diesem Zusammenhang die Identifizierung einer bestimmten Komponente zu verstehen. Eine derartige Lokalisierung ist mit einem Temperatursensor nur dann möglich, wenn dieser in unmittelbarer Nähe der erhöhten Temperatur angeordnet ist.

Durch die Sensitivität des Chemosensors ist eine frühzeitige Erfassung eines erhöhten Temperaturwerts möglich und zudem kann der Chemosensor von der potentiellen Schadensstelle entfernt angeordnet sein. Dadurch ist der Installationsaufwand für den Chemosensor gering. Da zudem die Chemosensoren sehr gut miniaturisierbar sind, wie in der Internet-Veröffentlichung des Instituts für analytische Chemie der Universität Wien festgestellt wird, bestehen keine Plazierungsprobleme für den Chemosensor.

Der Chemosensor eignet sich neben der direkten Erfassung der Temperaturerhöhung einer Komponente/Maschine gleichermaßen zur Temperaturwerterfassung eines Betriebsmittels, wie ein Schmiermittel oder Öl, sowie zur Temperaturwerterfassung eines Werkstücks, das insbesondere mechanisch, beispielsweise durch einen Spanvorgang, behandelt wird. Die Temperatur eines Betriebsmittels ist oftmals ein wichtiger Indikator für den ordnungsgemäßen Betrieb einer Anlage oder einer Maschine. Bei der mechanischen Bearbeitung eines Werkstücks tritt aufgrund der Reibungswärme eine erhöhte Temperatur auf. Eine Überschreitung einer zulässigen Maximaltemperatur kann zu einer Zerstörung des Werkstücks oder des bearbeitenden Werkzeugs, etwa ein Bohrer, führen. Der Chemosensor eignet sich daher insbesondere auch für ein Monitoring-System, mit dem eine Anlage oder ein Verfahrensprozess überwacht wird.

Vorzugsweise wird das vom Chemosensor an die Auswerteeinheit übermittelte Messsignal in der Auswerteeinheit mit hinterlegten Signalwerten, insbesondere mit Spektren, verglichen. Anhand dieser Spektren ist in einfacher Weise die Ermittlung des Temperaturwerts und/oder die Identifizierung eines speziellen Analytgases möglich. Zweckdienlicherweise werden die Spektren im Rahmen eines Eichprozesses ermittelt.

Vorteilhafterweise wird zur Lokalisierung des Temperaturwerts das Auftreten eines spezifischen Analytgases herangezogen. Durch die Ermittlung des spezifischen Analytgases, beispielsweise durch Vergleich mit einem entsprechend hinterlegten Spektrum, lässt sich beispielsweise das betroffene Bauteil ermitteln und somit die Schadensstelle lokalisieren.

Vorzugsweise wird weiterhin zur Quantifizierung des Temperaturwerts die Menge des erfassten Analytgases herangezogen. Dies erfolgt wiederum insbesondere durch Vergleich mit einem hinterlegten Spektrum. Dabei wird ausgenutzt, dass die Menge des emittierten Analytgases in der Regel mit der Temperatur zunimmt bzw. dass erst ab einem bestimmten Temperaturwert ein Analytgas emittiert.

Darüber hinaus wird zweckdienlicherweise eine temperaturbedingte fortschreitende Veränderung, insbesondere Zerstörung, eines zu überwachenden Gegenstands durch fortlaufende Auswertung des erfassten Analytgases überwacht. Dies geschieht insbesondere durch die Erfassung einer veränderten Analytgasmenge oder einer veränderten Analytgaszusammensetzung. Der letzten Variante liegt dabei die Überlegung zugrunde, dass bei einer fortschreitenden Schädigung unterschiedliche Materialien in Mitleidenschaft gezogen werden und dass sich demgemäß die Zusammensetzung des emittierten Analytgases ändert. Unter Gegenstand wird hier allgemein eine Maschine/Komponente, ein Betriebsmittel oder Werkstück verstanden.

Zweckdienlicherweise wird in den zu überwachenden Gegenstand zumindest ein Geruchsindikator eingebracht, um die Identifizierbarkeit zu erleichtern. Gleichzeitig bietet dies die Möglichkeit, die Lokalisierbarkeit zu verbessern, indem an unterschiedlichen Positionen unterschiedliche Geruchsindikatoren in den Gegenstand eingebracht oder eingelagert werden. Unter Geruchsindikatoren werden hierbei Stoffe oder Stoffzusammensetzungen verstanden, die unter Temperatureinfluss spezifische Analytgase emittieren. Zweckdienlicherweise wird dabei der Geruchsindikator in den Gegenstand dickenabhängig eingebracht. Dadurch ist in einfacher Weise eine fortschreitende Veränderung des Gegenstands möglich.

Um den Installationsaufwand gering zu halten ist der Chemosensor vorzugsweise zur Erfassung mehrerer unterschiedlicher Analytgase ausgebildet. Der Chemosensor kann also als breitbandig bezeichnet werden. Alternativ hierzu werden unterschiedliche Analytgase von verschiedenen Chemosensoren erfasst. Diese Chemosensoren sind bevorzugt an unterschiedlichen Positionen angeordnet. Derartige Chemosensoren, die lediglich für eine begrenzte Anzahl von Analytgasen oder nur für ein spezielles Analytgas vorgesehen sind, sind in der Regel kostengünstig.

Um insbesondere in einer elektrischen Hochspannungskomponente eine sichere und von der Hochspannung unbeeinflusste Übermittlung des Messsignals an die Auswerteeinheit zu ermöglichen, werden die Messsignale vorzugsweise drahtlos übertragen. Um zudem unabhängig von einer externen Energiequelle zu sein, ist der Chemosensor vorzugsweise batteriebetrieben.

In einer bevorzugten Ausführung wird ein Temperaturwert einer elektrischen Vorrichtung, insbesondere einer elektrischen Rotationsmaschine, wie ein Generator, erfasst. Durch den Einsatz des Chemosensors für einen Generator eines Kraftwerks lässt sich in besonders zuverlässiger und kostengünstiger Weise eine effektive Temperaturüberwachung von sicherheitsrelevanten Bauteilen erreichen. Zweckdienlicherweise bietet sich hierbei wahlweise und in Kombination die Überwachung des Temperaturwerts einer Isolierung eines elektrischen Leiters, einer Lötverbindung zwischen elektrischen Leitern, einer Kontaktfläche einer elektrischen Kontaktverbindung oder auch die Ermittlung einer durch Funkenerosion hervorgerufenen lokalen Temperaturerhöhung an. Diese Anwendungsfälle sind in der Regel durch die Emission von spezifischen Analytgasen geprägt.

Die Aufgabe wird gemäß der Erfindung weiterhin gelöst durch ein Erfassungssystem zur Ermittlung eines bei einem Arbeitsprozess auftretenden Temperaturwerts, wobei ein Chemosensor zur Erfassung eines beim Arbeitsprozess temperaturbedingt emittierten Analytgases sowie eine Auswerteeinheit zur Auswertung eines vom Chemosensor übermittelten Messsignals vorgesehen ist.

Die im Hinblick auf das Verfahren aufgeführten Vorteile und bevorzugten Ausgestaltungen sind sinngemäß auch auf das Erfassungssystem zu übertragen. Besonders vorteilhafte Ausgestaltungen des Erfassungssystems sind in den Unteransprüchen enthalten.

Insbesondere ist von Vorteil, wenn ein zu überwachender Gegenstand mehrere Geruchsindikatoren aufweist. Diese können durch den Aufbau des Gegenstands bedingt sein oder separat in den Gegenstand eingebracht sein. Diese Maßnahme dient in vorteilhafter Weise zur Lokalisierung und/oder Quantifizierung des Temperaturwerts.

Ausführungsbeispiele der Erfindung werden im Folgenden anhand der Figuren näher erläutert. Es zeigen jeweils in schematischen und grob vereinfachten Prinzipdarstellungen:
- FIG 1: ein Erfassungssystem zur Ermittlung eines erhöhten Temperaturwerts einer elektrischen Isolierung,
- FIG 2: ein Erfassungssystem zur Ermittlung eines erhöhten Temperaturwerts einer Lötverbindung,
- FIG 3 und 4: ein ausschnittsweise dargestelltes Erfasssungs-system zur Ermittlung eines erhöhten Temperaturwerts an einer veredelten elektrischen Kontaktfläche, und
- FIG 5: eine ausschnittsweise Darstellung eines Erfassungssystems zur Ermittlung eines erhöhten Temperaturwerts aufgrund einer Funkenerosion in einem Generatorbauteil.

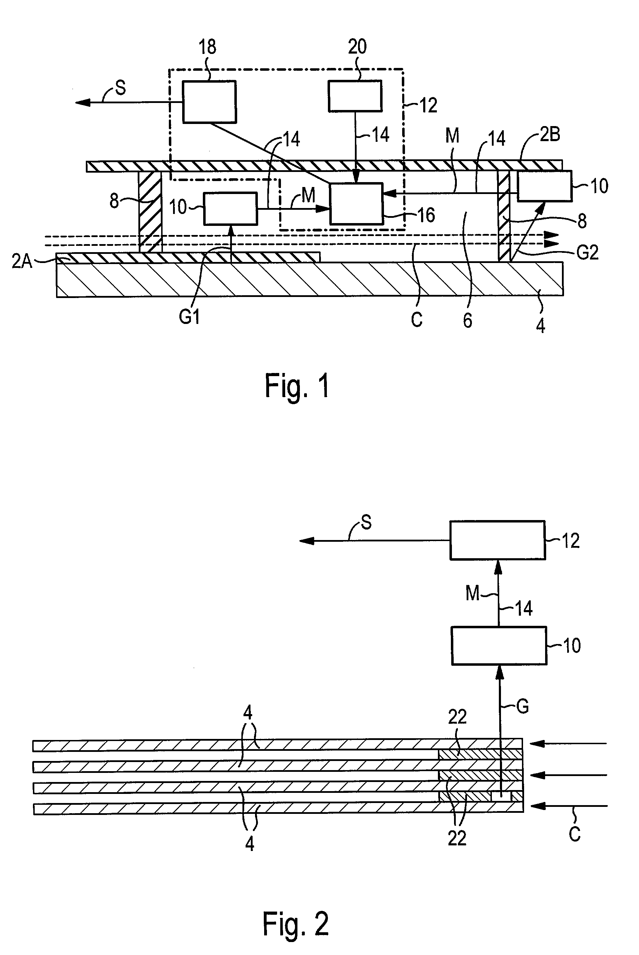

Gemäß FIG 1 weist eine zu überwachende elektrische Isolierung 2A,2B eines elektrischen Leiters 4 zwei unterschiedliche Isolationsteile auf. Das erste Isolationsteil ist eine unmittelbar auf den Leiter 4 aufgebrachte Isolationsschicht 2A. Das zweite Isolationsteil ist eine Isolationsstruktur 2B, die beabstandet vom Leiter 4 unter Einschließung eines Hohlraums 6 parallel zum Leiter 4 verläuft. Die Isolationsstruktur 2B stützt sich dabei mit Abstützelementen 8 am Leiter 4 sowie an der Isolationsschicht 2A ab. Die Isolationsschicht 2A und die Isolationsstruktur 2B bestehen aus unterschiedlichen Materialien.

Der elektrische Leiter 4 wird mit Hilfe eines Kühlmediums C gekühlt. Dieses wird durch den Hohlraum 6 zwischen dem Leiter 4 und der Isolationsstruktur 2B geführt.

Ein Erfassungssystem zur Ermittlung eines erhöhten Temperaturwerts entweder an der Isolationsschicht 2A oder an der Isolationsstruktur 2B umfasst gemäß dem Ausführungsbeispiel der FIG 1 zwei Chemosensoren 10 sowie eine Auswerteeinheit 12, die über Leitungen 14 mit den beiden Chemosensoren 10 verbunden ist. Die Auswerteeinheit 12 selbst wiederum umfasst ein Verarbeitungsmodul 16, eine Rechnereinheit 18 sowie eine Energiequelle 20. Die Rechnereinheit 18 und die Energiequelle 20 stehen über weitere Leitungen 14 mit dem Verarbeitungsmodul 16 in Verbindung. Über die Leitungen 14 zwischen dem Verarbeitungsmodul 16 und den Chemosensoren 10 werden diese mit Strom versorgt.

Bei einer Erwärmung der Isolierung 2A,2B wird temperaturbedingt ein Analytgas G1,G2 aus der Isolierung 2A,2B frei gesetzt. Die Isolierung 2A,2B gast aufgrund der erhöhten Temperatur aus. Aufgrund der unterschiedlichen Materialien der Isolation 2A, 2B treten unterschiedliche Analytgase G1,G2 aus, und zwar tritt aus der Isolationsschicht 2A das Analytgas G1 und aus der Isolationsstruktur 2B das Analytgas G2 aus.

Das Analytgas G1,G2 wird von dem jeweiligen Chemosensor 10 erfasst und ein entsprechendes Messsignal M wird jeweils an das Verarbeitungsmodul 16 weitergeleitet. Hier wird es in einem ersten Verarbeitungsschritt für die Weiterleitung an die Rechnereinheit 18 aufbereitet. In der Rechnereinheit 18 erfolgt die Auswertung der von den Chemosensoren 10 übermittelten Messsignale M. Dabei werden die Messsignale M mit in der Rechnereinheit 18 hinterlegten analytgas-spezifischen Spektren verglichen. Die Spektren sind vorzugsweise durch einen Eichprozess oder Lernprozess ermittelt. Ergibt der Vergleich, dass ein erhöhter kritischer Temperaturwert vorliegt, so gibt die Rechnereinheit ein Warnsignal S ab. Dieses kann automatisch und unmittelbar eine weitere Reaktion, beispielsweise eine Zwangsabschaltung des betroffenen elektrischen Geräts, hervorrufen. Aufgrund der analytgas-spezifischen Hinterlegung der Spektren ist eine Lokalisierung möglich, da die einzelnen Analytgase G1,G2 speziellen Bauteilen zugeordnet sind. Die Identifizierung eines speziellen Analytgases ermöglicht also die Identifizierung des betroffenen Bauteils.

Die Chemosensoren 10 sind vorzugsweise speziell für das zu erwartende Analytgas G1, welches aus der Isolationsschicht 2A ausdampft, bzw. für das Analytgas G2, welches aus der Isolationsstruktur 2B ausdampft, ausgelegt. Um eine möglichst sichere und rasche Erfassung zu gewährleisten, sind die Chemosensoren 10 jeweils auch in Nähe der kritischen Stellen der Isolationsschicht 2A bzw. der Isolationsstruktur 2B im Hohlraum 6 angeordnet. Die kritische Stelle der Isolationstruktur 2B ist der Berührungspunkt zwischen dem Abstützelement 8 und dem Leiter 4. Alternativ zu der dargestellten Variante mit den zwei Chemosensoren 10 ist lediglich ein Chemosensor 10 vorgesehen, der für die Erfassung beider Analytgase G1,G2 ausgebildet ist. Ein derartiger Chemosensor kann also als breitbandiger Chemosensor bezeichnet werden. Da mit einem breitbandigen Chemosensor 10 nur eine geringe Anzahl von Chemosensoren 10 erforderlich ist, ist der Instaliationsaufwand gering.

Der Leiter 4 ist beispielsweise ein Leiter in einer hochspannungsführenden Komponente, beispielsweise ein Generator für die großtechnische Energieerzeugung. Die Leitungen 14 sind in einem solchen Fall, in dem hohe Spannungen anliegen, vorzugsweise als Glasfaserkabel ausgebildet, um eine faseroptische Daten- und/oder Energieübertragung zu ermöglichen. Alternativ hierzu ist auch eine vollständig drahtlose Übertragung zwischen den Chemosensoren 10 zum Verarbeitungsmodul 16 und von diesem zur Rechnereinheit 18 von Vorteil. Gleichzeitig ist hierbei in den Chemosensoren 10 und im Verarbeitungsmodul 16 jeweils eine dezentrale Energieversorgung insbesondere in Form einer Batterie vorgesehen.

In einem derartigen System mit einem durch ein Kühlmedium C gekühlten elektrischen Leiter 4 besteht die Gefahr, dass bei mangelnder Zufuhr des Kühlmediums C der elektrische Leiter 4 überhitzt, seine Wärme also nicht mehr in ausreichendem Maße abgeführt wird. Dies zieht eine Temperaturerhöhung nach sich, die zu einer Schädigung der Isolierung 2A,2B führen kann. Aufgrund der erhöhten Temperatur tritt aus der Isolierung 2A,2B entweder erstmals oder in größeren Mengen das jeweilige Analytgas G1,G2 aus. Das Analytgas G1,G2 an sich oder die austretende Menge des Analytgases G1,G2 kann daher als Maß für eine absolute Temperatur als auch als Maß für eine relative Temperaturänderung herangezogen werden. Durch die erhöhte Temperatur besteht zumindest mittelfristig die Gefahr, dass die Isolierung 2A,2B Schaden nimmt. Durch rechtzeitiges Erkennen des erhöhten Temperaturwerts und durch eine entsprechend schnell eingeleitete Gegenmaßnahme kann der Eintritt dieses Schadens verhindert werden. In dem hier beschriebenen Fall reicht es bei rechtzeitiger Erkennung des erhöhten Temperaturwerts aus, vor der erneuten Inbetriebnahme für eine ausreichende Kühlung des Leiters 4 zu sorgen. In sicherheitsrelevanten Bauteilen und bei entsprechenden Verdachtsmomenten wird die Isolierung 2A,2B überprüft und gegebenenfalls ausgetauscht. Durch rechtzeitiges Erkennen ist ausgeschlossen, dass durch das Versagen der Isolierung 2A,2B die elektrische Komponente, beispielsweise ein Generator, einen Totalschaden erleidet.

Eine weitere potentielle Gefahrenquelle für eine erhöhte Temperatur neben der Isolierung 2A,2B sind allgemein elektrische Kontakte zwischen zwei Leitern. Bei mangelndem Kontakt erhöht sich der Kontaktwiderstand, so dass es an der Kontaktstelle zu erhöhten Temperaturen kommt. Diese potentielle Gefahrenquelle einer mangelhaften Kontaktierung wird anhand der FIG 2 bis 4 an unterschiedlichen Beispielen erläutert.

Gemäß FIG 2 sind unisolierte Leiter 4, beispielsweise einer Wicklung oder einer Schaltung einer elektrischen Maschine, miteinander über eine Lötverbindung 22 verbunden. Die Leiter 4 werden mit einem Kühlmedium C gekühlt. Es besteht die Gefahr, dass die Lötverbindung 22 entweder thermisch aufgrund mangelnder Kühlung oder mechanisch aufgrund von Vibrationen belastet und geschädigt wird, so dass sich der Kontaktwiderstand erhöht. Dadurch bedingt tritt eine Temperaturerhöhung auf, die das Lot der Lötverbindung 22 zum Schmelzen bringt. Die dabei austretenden Gase werden als Analytgas G vom Chemosensor 10 erfasst und an die Auswerteeinheit 12 weitergeleitet. Bei Überschreiten eines Grenzwertes wird wiederum ein Signal S abgegeben.

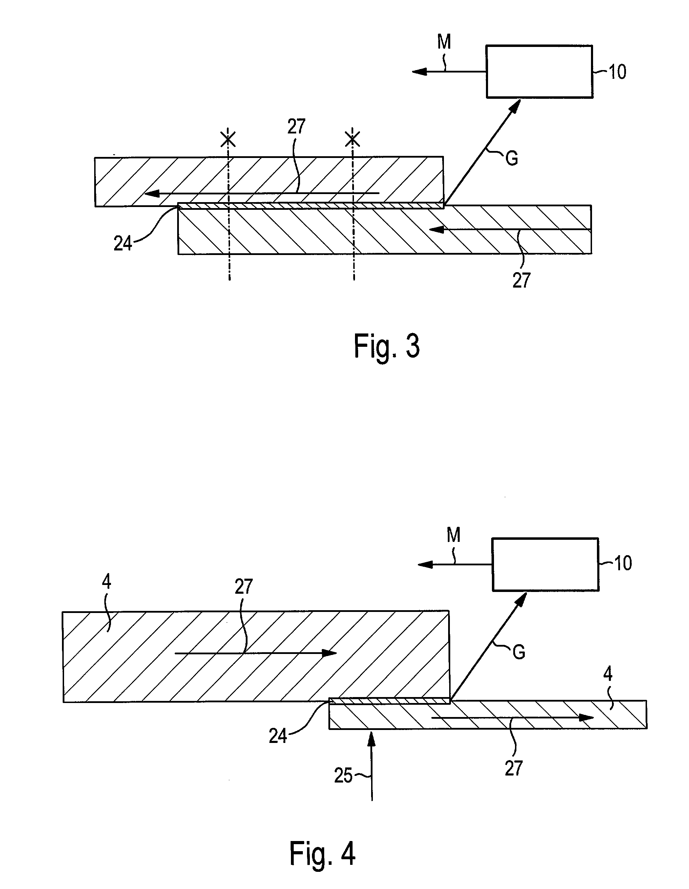

Gemäß den FIG 3 und 4 sind zwei Leiter 4 an einer Kontaktfläche 24 miteinander elektrisch leitend verbunden. Die Kontaktfläche 24 ist in der Regel als veredelte Schicht ausgeführt und hierzu mit einem speziellen Metall, wie beispielsweise Silber, Gold, Zinn usw. beschichtet. Die beiden Leiter 4 sind dabei gemäß FIG 3 miteinander verschraubt, wie durch die senkrecht dargestellten gestrichelten Linien 26 angedeutet ist. Ein unkontrolliertes Lösen der Schraubverbindung führt zu einem erhöhten Kontaktwiderstand und zu einer Temperaturerhöhung, die unter Umständen ein Verdampfen der veredelten Schicht bewirkt. Das durch das Schmelzen des Metalls emittierte Analytgas G wird vom Chemosensor 10 erfasst und zu einer hier nicht dargestellten Auswerteeinheit 12 weitergeleitet. Gemäß FIG 4 ist eine fliehkraftabhängige Kontaktverbindung zwischen den beiden Leitern 4 ausgebildet. Eine derartige fliehkraftabhängige Kontaktverbindung wird bei einem - hier nicht näher dargestellten - Generatorläufer beipielsweise zwischen einem Nutverschlusskeil oder einem sogenannten Dämpferstab und den Dämpferringen bzw. den Läuferkappen ausgebildet. Die Fliehkraft wirkt in Richtung des Pfeils 25.

Bei der fliehkraftabhängigen Kontaktverbindung besteht die Gefahr einer unzulässig hohen Temperatur aufgrund unzulässig hoher Inversströme 27 oder hohen Übergangswiderständen. Dies führt zur Emission des Analytgases G.

Mitunter ist an den Kontaktflächen 24 zusätzlich oder alternativ zu der veredelten Schicht ein Kontaktmittel, beispielsweise ein Kontaktfett aufgetragen. Bei erhöhter Temperatur verdampft ein kontaktfettspezifisches Analytgas G, das ebenfalls als Indikator für eine erhöhte Temperatur herangezogen werden kann.

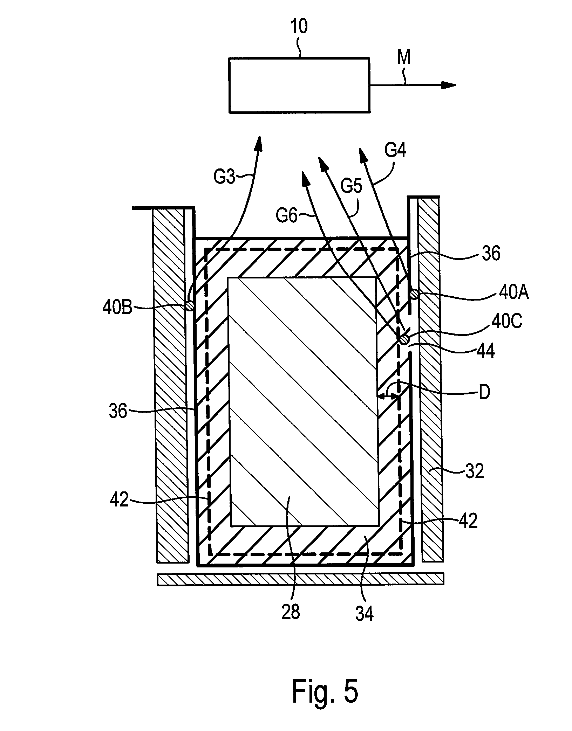

FIG 5 zeigt einen Teilausschnitt eines Kraftwerks-Generator, der üblicherweise für mehrere 100 Megawatt Leistung ausgelegt ist. Bei derartigen Generatoren ist ein hochspannungsführender Stab 28 als Teil der Generatorwicklung in einer Nut 30 eines sogenannten Blechpakets 32 angeordnet. Der Stab 28 ist üblicherweise von einer Stabisolierung 34 und diese wiederum von einem Außenglimmschutz 36 umgeben. Die Stabisolierung 34 wird üblicherweise als ein mit Epoxidharz getränktes Wicklungsband ausgeführt. Zwischen dem Außenglimmschutz 36 und dem Blechpaket 32 kann eine Nutseitenfeder angeordnet sein.

Sowohl das Blechpaket 32 als auch der Stab 28 sind elastisch leitfähige Teile auf unterschiedlichem Potential. Aufgrund der hohen Spannungen im Generator besteht die Gefahr der Funkenerosion, also der durch elektrische Spannungsüberschläge (Funkenentladung) bedingten Erosion der Stabisolierung 34 bzw. des Außenglimmschutzes 36. Die Funkenerosion ist ein lokal stark begrenztes und auch nur kurzfristiges Ereignis, das mit herkömmlichen Methoden nur sehr schwer zu detektieren ist. Bei auftretender Funkenerosion wird zunächst der Außenglimmschutz 36 abgetragen, wie durch den Punkt 40A angedeutet ist. Dabei wird der im Außenglimmschutz 36 befindliche Kohlenstoff durch die punktuellen, hohen Temperaturen freigesetzt. Zusätzlich wird in der Regel durch die Funkenentladung bedingt auch Ozon freigesetzt, wie durch den Punkt 40B schematisch angedeutet ist. Der Chemosensor 10 erfasst diese Analytgase G, also entweder das Ozon als Analytgas G3 oder den Kohlenstoff als Analytgas G4. Der Chemosensor 10 leitet die erfassten Daten als Messsignal M weiter.

In die Stabisolierung ist bei einer Dicke D ein spezieller Geruchsindikator 42 eingebracht. Hierzu wird beim Herstellen der Stabisolierung 34 das Wicklungsband mit dem Geruchsindikator getränkt oder bestrichen, sobald die Dicke D erreicht ist. Tritt nunmehr eine Funkentladung an einer Stelle 44 auf, bei der der Außenglimmschutz 36 zerstört ist, so erfolgt eine Erosion der Stabisolierung 34 zunächst im äußeren Bereich, und es tritt ein epoxidharz-spezifisches Analytgas G5 aus (Punkt 40C). Mit zunehmender Zerstörung der Stabisolierung wird der Bereich mit dem Geruchsindikator 42 erreicht, und es wird ein geruchsindikator-spezifisches Analytgas G6 freigesetzt. Das Auftreten des Analytgases G6 ist ein Indikator dafür, dass die Stabisolierung 34 bereits bis zu einer vorgegebenen Dicke D geschädigt ist. Mit dieser Maßnahme ist also eine dickenabhängige Überwachung der Stabisolierung und ein Verfolgen der Funkenerosion in drei Stufen möglich, nämlich zunächst die Zerstörung des Außenglimmschutzes 36, dann die Zerstörung der äußeren Stabisolierung 34 und als dritte Stufe das Zerstören des mit dem Geruchsindikator präparierten Bereichs.

Um eine besonders gute Lokalisierung möglicher Funkenerosionen zu erreichen, ist vorzugsweise vorgesehen, dass jedem Stab 28 ein Chemosensor 10 zugeordnet ist.

Neben den zu den Figuren beschriebenen Ausführungsbeispielen im Hinblick auf eine elektrische Komponente/Anlage kann das Verfahren zur Ermittlung des Temperaturwerts mittels des Chemosensors 10 auch in anderen technischen Bereichen erfolgversprechend eingesetzt werden. Mit dem Geruchssensor 10 bietet sich beispielsweise die Erfassung von erhöhten Temperaturen in einem Betriebsmittel an. Öl als ein Betriebsmittel wird beispielsweise in Gleitlagern oder ähnlichen Systemen als Schmiermittel eingesetzt. Wird das Gleitlager nicht mehr ausreichend geschmiert, beispielsweise aufgrund eines Ölmangels, tritt aufgrund der erhöhten Reibung eine Temperaturerhöhung auf und die dadurch bedingte Emission eines Analytgases G aus dem Restöl wird von einem Chemosensor 10 erfasst und weitergehende Schäden können vermieden werden. Der Chemosensor 10 kann dabei sowohl unmittelbar am Gleitlager angeordnet sein oder einer Ölzufuhr für das Gleitlager zugeordnet sein.

Ein anderes Anwendungsbeispiel ist das Gebiet der Werkzeugbearbeitung. Insbesondere bei der spanenden Bearbeitung mit einem Werkzeug, wie Drehen, Fräsen, Bohren, usw. werden mitunter hohe Schnittgeschwindigkeiten bei der Behandlung eines Werkstücks eingesetzt. Die Schnittgeschwindigkeit wird dabei nach dem jeweiligen Anwendungszweck eingestellt. Ist die Schnittgeschwindigkeit zu hoch oder unterbleibt eine vorgesehene Kühlung, so tritt aufgrund der Reibungswärme eine unerwünscht hohe Temperatur auf, die zu einer Zerstörung des Werkzeugs oder auch des Werkstücks führt. Aufgrund der erhöhten Temperatur wird wiederum ein Analytgas G freigesetzt. Dies wird erfasst und es werden entsprechende Schutzmaßnahmen eingeleitet.

## Patentansprüche

1. Verfahren zur Ermittlung eines bei einem Arbeitsprozess auftretenden Temperaturwerts, **dadurch gekennzeichnet, dass** eine temperaturbedingte Emission eines Analytgases (G,G1-G6) in einem Chemosensor (10) erfasst und in einer Auswerteeinheit (12) ausgewertet wird.

2. Verfahren nach Anspruch 1, **dadurch gekennzeichnet, dass** ein durch das Analytgas (G,G1-G6) hervorgerufenes Messsignal (M) des Chemosensors (10) an die Auswerteeinheit (12) weitergeleitet und dort zur Auswertung mit hinterlegten Signalwerten verglichen wird.

3. Verfahren nach Anspruch 1 oder 2, **dadurch gekennzeichnet, dass** zur Lokalisierung des Temperaturwerts das Auftreten eines spezifischen Analytgases (G,G1-G6) herangezogen wird.

4. Verfahren nach einem der vorhergehenden Ansprüche, **dadurch gekennzeichnet, dass** zur Quantifizierung des Temperaturwerts die Menge des erfassten Analytgases (G,G1-G6) herangezogen wird.

5. Verfahren nach einem der vorhergehenden Ansprüche, **dadurch gekennzeichnet, dass** eine temperaturbedingte fortschreitende Veränderung eines zu überwachenden Gegenstands (34) durch fortlaufende Auswertung des erfassten Analytgases (G,G1-G6) überwacht wird.

6. Verfahren nach einem der vorhergehenden Ansprüche, **dadurch gekennzeichnet, dass** in einen zu überwachenden Gegenstand (34) zumindest ein Geruchsindikator (42) eingebracht wird.

7. Verfahren nach Anspruch 5, **dadurch gekennzeichnet, dass** der zumindest eine Geruchsindikator (42) in den Gegenstand (34) dickenabhängig eingebracht wird.

8. Verfahren nach einem der vorhergehenden Ansprüche, **dadurch gekennzeichnet, dass** der Chemosensor (10) zur Erfassung mehrerer unterschiedlicher Analytgase (G,G1-G6) ausgebildet ist.

9. Verfahren nach einem der vorhergehenden Ansprüche, **dadurch gekennzeichnet, dass** der Chemosensor (10) von der Auswerteeinheit (12) getrennt ist und die Messsignale (M) drahtlos übertragen werden.

10. Verfahren nach einem der vorhergehenden Ansprüche, **dadurch gekennzeichnet, dass** ein Temperaturwert einer elektrischen Vorrichtung, insbesondere eines Generators erfasst wird

11. Verfahren nach Anspruch 9, **dadurch gekennzeichnet, dass** wahlweise oder in Kombination der Temperaturwert einer Isolierung (2A,2B,34) eines elektrischen Leiters (4,28), einer Lötverbindung (22) zwischen elektrischen Leitern (4), einer Kontaktfläche (24) einer elektrischen Kontaktverbindung oder eine durch Funkenerosion hervorgerufene lokale Temperaturerhöhung erfasst wird.

12. Erfassungssystem zur Ermittlung eines bei einem Arbeitsprozess auftretenden Temperaturwerts, **dadurch gekennzeichnet, dass** ein Chemosensor (10) zur Erfassung eines beim Arbeitsprozess temperaturbedingt emittierten Analytgases (G,G1-G6) sowie eine Auwerteeinheit (12) zur Auswertung eines vom Chemosensor (10) übermittelten Messsignals (M) vorgesehen ist.

13. Erfassungssystem nach Anspruch 12, **dadurch gekennzeichnet, dass** in einen zu überwachenden Gegenstand (34) zumindest ein Geruchsindikator (42) eingebracht ist.

14. Erfassungssystem nach Anspruch 12 oder 13, **dadurch gekennzeichnet, dass** ein zu überwachender Gegenstand (34) mehrere Geruchsindikatoren (42) aufweist.

15. Erfassungssystem nach einem der Ansprüche 12 bis 14, **dadurch gekennzeichnet, dass** der Chemosensor (10) von der Auswerteeinheit (12) getrennt und für eine drahtlose Übermittlung des Messsignals (M) ausgebildet ist.

16. Erfassungssystem nach einem der Ansprüche 12 bis 15, **dadurch gekennzeichnet, dass** der Chemosensor (10) zur Erfassung mehrerer unterschiedlicher Analytgase (G,G1-G6) ausgebildet ist.

17. Erfassungssystem nach einem der Ansprüche 12 bis 16, **dadurch gekennzeichnet, dass** es in einer elektrischen Vorrichtung, insbesondere in einem Generator, integriert ist.
